# EUROPÄISCHE PATENTSCHRIFT

(11) **EP 2 534 221 B1**
(45) Veröffentlichungstag und Bekanntmachung des Hinweises auf die Patenterteilung: **06.07.2016**
(21) Anmeldenummer: 11718263.4
(22) Anmeldetag: 09.02.2011
(51) Int. Cl.: C09K 11/68, C09K 11/77, B41M 3/14, G01N 21/17, G01N 21/62, G01N 21/64, G07D 7/00, G07D 7/12

(54) **VERFAHREN ZUM IDENTIFIZIEREN EINES GEGENSTANDES**
METHOD FOR IDENTIFYING AN OBJECT
PROCÉDÉ D'IDENTIFICATION D'UN OBJET

(30) Priorität: 10.02.2010 DE 102010007566
(43) Veröffentlichungstag der Anmeldung: 19.12.2012
(73) Patentinhaber: Tailorlux GmbH, 48161 Münster (DE)
(72) Erfinder: JÜSTEL, Thomas, 58455 Witten (DE); UHLICH, Dominik, 48565 Steinfurt (DE); BETTENTRUP, Helga, 48565 Steinfurt (DE); DEITERMANN, Alex, 49076 Osnabrück (DE); RÜTTER, Sebastian, 48147 Münster (DE)
(74) Vertreter: Bungartz Christophersen Partnerschaft mbB Patentanwälte
(86) Internationale Anmeldenummer: PCT/DE2011/075015
(87) Internationale Veröffentlichungsnummer: WO 2011/098083

(56) Entgegenhaltungen:
- EP-A1- 1 237 128
- EP-A2- 1 241 021
- WO-A1-81/03507
- WO-A1-2004/101890
- DE-A1- 19 804 024
- DE-A1- 19 804 032
- DE-A1- 19 860 093
- XIAOXIA ZHAO: "Luminescent properties of YBO", PROCEEDINGS OF SPIE, Bd. 6030, 1. Januar 2006 (2006-01-01), Seiten 60300N-60300N-6, XP55001507, ISSN: 0277-786X, DOI: 10.1117/12.667636
- DATABASE INSPEC [Online] THE INSTITUTION OF ELECTRICAL ENGINEERS, STEVENAGE, GB; Oktober 2008 (2008-10), KEUN-CHOON PARK ET AL: "Optical properties of Eu2(WO4)3 and Tb2(WO4)3 and of CaWO4 doped with Eu<3+> or Tb<3+> - revisited", XP002645455, Database accession no. 10590209 & JOURNAL OF THE KOREAN PHYSICAL SOCIETY KOREAN PHYSICAL SOCIETY SOUTH KOREA, Bd. 53, Nr. 4, Oktober 2008 (2008-10), Seiten 2220-2223, ISSN: 0374-4884
- DATABASE INSPEC [Online] THE INSTITUTION OF ELECTRICAL ENGINEERS, STEVENAGE, GB; März 1996 (1996-03), GOMI M ET AL: "Ce<3+>, Fe<3+>-induced optical absorption in Ce,Fe:YAG prepared by coprecipitation", XP002645456, Database accession no. 5264117 & JAPANESE JOURNAL OF APPLIED PHYSICS, PART 1 (REGULAR PAPERS & SHORT NOTES) PUBLICATION OFFICE, JAPANESE JOURNAL APPL. PHYS. JAPAN, Bd. 35, Nr. 3, März 1996 (1996-03), Seiten 1798-1801, ISSN: 0021-4922
- DATABASE INSPEC [Online] THE INSTITUTION OF ELECTRICAL ENGINEERS, STEVENAGE, GB; Februar 1998 (1998-02), KATSUMATA T ET AL: "Characteristics of strontium aluminate crystals used for long-duration phosphors", XP002645457, Database accession no. 5874150 & JOURNAL OF THE AMERICAN CERAMIC SOCIETY AMERICAN CERAMIC SOC. USA, Bd. 81, Nr. 2, Februar 1998 (1998-02), Seiten 413-416, ISSN: 0002-7820
- DATABASE INSPEC [Online] THE INSTITUTION OF ELECTRICAL ENGINEERS, STEVENAGE, GB; Juni 2009 (2009-06), DU YUAN ET AL: "Effects of size and surface on luminescence properties of submicron upconversion NaYF4:Yb,Er particles", XP002645458, Database accession no. 11011701 & JOURNAL OF MATERIALS RESEARCH MATERIALS RESEARCH SOCIETY USA, Bd. 24, Nr. 6, Juni 2009 (2009-06), Seiten 2042-2050, ISSN: 0884-2914, DOI: DOI:10.1557/JMR.2009.0258

## Beschreibung

Die vorliegende Erfindung betrifft ein Verfahren zur Identifizierung eines Gegenstandes, wobei dieser Gegenstand ein Sicherheitselement aufweist, das ein oder mehrere anorganische Lumineszenzpigmente enthält, sowie ein Sicherheitselement und eine Vorrichtung zum Identifizieren eines Gegenstandes.

Zum Schutz gegen Nachahmung oder Reproduktion von Informationsträgern, z.B. mit Farbkopierern oder anderen Reproduktionsverfahren, werden diese mit Sicherheitselementen, wie z.B. dem Wasserzeichen oder Moirestrukturen, ausgestattet, die bei der Reproduktion nicht oder nur unzureichend kopiert werden, wodurch eine Fälschung vom Original unterschieden werden kann.

Der Schutz von Informationsträgern und Markenprodukten aller Art wird immer bedeutender. Zum Beispiel schätzt die WHO, dass der Handel mit Piraterieprodukten 2007 einen Umfang von 300 Mrd. Euro erreichte. Zunehmend häufen sich auch Fälle, in denen Pharmazeutika oder sicherheitsrelevante Fahrzeugteile gefälscht werden, wodurch nicht nur Schaden für die Hersteller der Markenprodukte entsteht, sondern auch eine Gefährdung des Kunden bzw. Verbrauchers in Kauf genommen wird.

Ein noch weitergehender Fälschungsschutz kann erreicht werden, wenn das Sicherheitselement aus einem photonischen oder lumineszenten Material besteht, dessen Farbe bzw. Lumineszenz vom Blickwinkel oder von der Bestrahlungssituation abhängt, oder aus einer Prägestruktur, die haptisch erfasst werden kann.

Die optischen Eigenschaften von Lumineszenzpigmenten wurden intensiv untersucht. So offenbaren Zaho et al. in ICO 20: Display devices and systems, Proch. of SPIE Vol. 6030, pages 60300N - 60300N-6, (ISSN: 0277-786X, DOI 10.117/12.667636) die Lumineszenzeigenschaften von Ce und Tb-dotierten und co-dotierten YBO₃.

In XP-002645455 (J. of the Korean Phys. Soc., Vol. 53, No. 4 (2008), pages 2220-2223, ISSN 0374-4884) offenbaren Keun-Choon Pak et al. die optischen Eigenschaften von EU₂(WO₄)₃, Tb₂(WO₃)₃ und CaWO₄ jeweils dotiert mit Eu³ oder Tb³.

In XP-02645456 (Jap. J. Appl. Phys., Part 1,Vol. 35, No. 3, (1996), pages 1798-1801) offenbaren Gomi et al. die Untersuchungsergebnisse übeer die Einflüsse von Ce³⁺ und Fe³⁺ auf die optische Absorption von Ce,Fe:YAG, das erhalten durch Copräzipitation wurde.

Die optischen Eigenschaften von Strontiumaluminatkristallen, insbesondere Sr₃Al₂O₆, SrAl₂O₄, SrAl₄O₇ und SrAl₁₂O₁₉, jeweils dotiert mit Eu²⁺ und Dy³⁺ und den Einfluss der Dotierung auf die phosphoreszierenden Eigenschaften werden von Katsumata et al. in J. Am. Ceramic Society, Vol. 81, No. 2 (1998) pages 413-416 (ISSN 0002-7820) offenbart.

Der Einfluss der Größe und der Oberfläche auf die Lumineszenzeigenschaften von Up-Conversion-Partikeln von NaYF₄:Yb,Er im Submikronbereich wird von Du Yuan et al. in XP-002645458 (J. Mat. Res., Vol. 24, No. 6, 2009, pages 2042-2050, ISSN 0884-2914, DOI:10.1557/JMR2009.0258) beschrieben.

Aus der WO 2009/071167 ist ein optisches Sicherheitselement auf der Basis von anisotropen Pigmenten bekannt, das ein intrinsisch verdecktes und/oder forensisches Sicherheitselement aufweist und aus einer transparenten anorganischen Matrix und mindestens einem in diese Matrix eingelagerten partikulären Material, welches von der Matrix verschieden ist, besteht. Das eingelagerte partikuläre Material absorbiert, reflektiert und/oder emittiert unter der Einwirkung von elektromagnetischer Strahlung sichtbares Licht selektiv oder nicht selektiv.

Die Verwendung lumineszierender Verbindungen oder Pigmente zur Authentizitätssicherung eines Wertdokumentes ist ebenfalls seit einiger Zeit bekannt. So werden in DE 198 04 032 und DE 198 04 024 bedruckte Wertdokumente mit zumindest einem Echtheitsmerkmal in Form einer lumineszierenden Substanz auf der Basis von mit wenigstens einem Seltenerdmetall dotierten Wirtsgitter, das im Wesentlichen im sichtbaren Spektralbereich absorbiert, damit zur Lumineszenz angeregt werden kann und zumindest in Teilbereichen des IR-Spektralbereichs transparent ist, offenbart. In der DE 198 04 032 wird als Seltenerdmetall Holmium und in der DE 198 04 024 ein Gemisch aus den Seltenerdmetallen Thulium und Holmium eingesetzt wird. Die Lumineszenzstoffe liegen im Volumen des Wertdokuments in einer so hohen Konzentration vor, dass die Eigenschaften des Wertdokuments gerade nicht beeinträchtigt werden. Von den Seltenerdmetallen werden jeweils Emissionen bei ausgewählten Wellenlängen erfasst.

Lumineszierende Pigmente eröffnen aufgrund der Tatsache, dass sowohl die Lumineszenzintensität als auch die spektrale Energieverteilung von der Anregungsenergie, der Temperatur, dem Druck, der Defektdichte und vom Zeitpunkt der Messung nach dem Ende des Anregungspulses abhängt, vielfältige Möglichkeiten als Sicherheitselement zu dienen. Dabei kann ein Sicherheitsmerkmal auf der Basis einer lumineszierender Substanz verdeckt oder offen sein.

In der WO 81/03507 wird ein weiteres Wertpapier mit Echtheitsmerkmalen in Form von lumineszierenden Substanzen von mit Seltenerdmetallen dotierten Wirtsgittern offenbart. Das Wirtsgitter absorbiert im Wesentlichen im gesamten sichtbaren Bereich und gegebenenfalls zusätzlich im nahen IR und ist in wesentlichen Teilen des sichtbaren oder des nahen IR-Bereichs anregbar und hat im IR einen optisch transparenten Bereich, in dem die lumineszierende Substanz ausschließlich emittiert. Von den Lumineszenzsubstanzen werden Anregungsspektren aufgenommen, um die Eignung der jeweiligen Substanz als Echtheitsmerkmal für das beanspruchte Wertpapier zu überprüfen.

Die Verwendung der zeitabhängigen Intensität als Sicherheitsmerkmal wird z. B. in der EP 1 237 128 beschrieben. Dort wird ein Verfahren zur Authentifizierung einer Sicherheitsmarkierung, die eine Lumineszenzverbindung enthält, die durch eine Lichtquelle angeregt werden kann, offenbart. Zur Durchführung des Verfahrens wird die Markierung durch Licht angeregt und die Intensität der emittierten Lumineszenz gemessen. Die Intensität wird während oder nach der Anregung durch die Lichtquelle in Zeitintervallen (T1, T2, T3, T4, T5, T6, T7, T8) gemessen, wobei diese Zeitintervalle derart ausgewählt sind, dass nach dem Abziehen der während eines Zeitintervalls gemessenen Intensitätswerte von dem Intensitätswert, der in einem anderen Zeitintervall aufgenommen wurde, das Ergebnis der Subtraktion repräsentativ für das vom Lumineszenzmaterial emittierte Licht ist. Das Verfahren soll eine schnelle Identifizierung der charakteristischen Lumineszenzparameter ermöglichen, wie Emissionsintensität und Zeitkonstanten. Es hat darüber hinaus den Vorteil, dass es nicht gegenüber Störungen durch das Licht aus der Umgebung empfindlich ist und daher die Anforderungen an optische Filter verringert werden.

Sicherheitselemente auf Basis lumineszierender Materialien, enthalten allermeist lösliche organische Leuchtstoffe, weil diese leicht zu Tinten oder Lacken verarbeitet werden können und somit leicht auf- bzw. einzubringen sind, wie es beispielsweise in der US 2007/051929 und WO 2004/081125 beschrieben wird. Das Problem der meisten organischen Leuchtstoffe ist allerdings deren geringe Stabilität, insbesondere gegenüber höheren Temperaturen und Bestrahlung mit blauem Licht oder UV-Strahlung, und manchmal auch deren toxikologische Bedenklichkeit. Zudem sind organische Leuchtstoffe leicht zu fälschen, da bei Kenntnis der Strukturformel das Spektrum der Substanz eindeutig und beispielsweise mit moderner Software auch berechenbar ist.

Die EP 1 241 021 offenbart ein Wert- und/oder Sicherheitsdokument für die Hochgeschwindigkeitsverifikation, welches Up-Conversion-Elemente in Form von kleinen anorganischen Partikeln enthält und die derart oberflächennah auf dem Wert- und/oder Sicherheitsdokument appliziert sind, dass eine Hochgeschwindigkeitsverifikation mittels NIR-Strahlung und Detektion der Emissionsspektren im sichtbaren und NIR-Bereich des elektromagnetischen Spektrums erfolgt. Als Up-Conversion-Element werden ein Thuliumaktiviertes und Ytterbium-codotiertes Gadoliniumoxisulfid der Zusammensetzung (Gd_{1-x-y}YbₓTmₓ)₂O₂S bzw. (Gd_{1-x-y})₂O₂S:Ybₓ,Tm_{y} verwendet.

Aus der WO 2004/101890 ist ein flächiges duales Sicherheitsmerkmal bekannt, welches zwei unterschiedliche Sicherheitskomponenten enthält, von denen eine im sichtbaren Spektralbereich und die andere im ultravioletten Spektralbereich des Lichts verifizierbar ist. Als Sicherheitsmerkmale werden plättchenförmige Effektpigmente sowie lumineszierende Pigmente in einer derart niedrigen Konzentration eingesetzt, dass die Pigmente unter Einwirkung von UV-Licht mit bloßem Auge als Einzelpartikel erkennbar sind.

In der DE 198 60 093 A1 wird ein weiteres Wertdokument, wie eine Banknote, Ausweiskarte oder dergleichen offenbart, das eine erste und eine zweite maschinell prüfbare physikalische oder chemische Eigenschaft aufweist, wobei beide physikalische oder chemische Eigenschaften von wenigstens einem Merkmalsstoff sind und sich diese Eigenschaften voneinander getrennt maschinell prüfen lassen. Die erste prüfbare Eigenschaft soll der Merkmalsstoff bei einer ersten Temperatur verlieren bzw. diese Eigenschaft soll sich messbar verändern und die zweite prüfbare Eigenschaft soll bei der ersten Temperatur behalten werden und gegebenenfalls bei einer zweiten Temperatur sich verändern, d. h. diese soll sich deutlich von der ersten Temperatur unterscheiden oder ganz verschwinden. Über die unterschiedlichen prüfbaren Eigenschaften ist es möglich, ein Wertdokument sowohl anhand des Wertdokumentes selbst als auch anhand seiner Asche identifizieren zu können.

Die aus dem Stand der Technik bekannten Sicherheitsdokumente haben den Nachteil, dass mit den darin enthaltenen Elementen es zwar möglich ist, nachzuweisen, ob diese spezielle Verbindung enthalten ist oder nicht, es kann jedoch kein Nachweis erbracht werden, ob das untersuchte Dokument tatsächlich auf einen bestimmten Hersteller zurückzuführen ist.

Der Erfindung liegt deshalb die Aufgabe zugrunde, ein offenes oder verdecktes Sicherheitselement der eingangs genannten Art zur Verfügung zu stellen, das die Nachteile der bekannten Sicherheitselemente vermeidet, d.h. ein erhöhtes Maß an Fälschungssicherheit bietet, ökologisch unbedenklich ist, eine hohe Stabilität aufweist und zugleich auf einfache Art und Weise auf seine Echtheit hin überprüft werden kann. Ferner ist es Aufgabe der vorliegenden Erfindung, ein Verfahren zur Identifizierung eines Gegenstandes zur Verfügung zu stellen, mit welchem die Echtheit dieses Gegenstandes nachgewiesen werden kann.

Gegenstand der vorliegenden Erfindung ist ein Verfahren zur Identifizierung eines Gegenstandes, wobei der Gegenstand ein Sicherheitselement aufweist, das ein oder mehrere anorganische Lumineszenzpigmente enthält, wobei das Verfahren die Schritte umfasst
- Erzeugen von mindestens zwei voneinander verschiedenen Emissionsspektren des/der verwendeten Lumineszenzpigments(e) unter definierten Anregungsbedingungen, wobei diese Spektren erhalten werden können mit voneinander verschiedenen Anregungspulsen und/oder das Abklingverhalten darstellen,
- Abgleichen der erhaltenen Emissionsspektren mit den für das/die Lumineszenzpigmente unter denselben Anregungsbedingungen erhaltenen vorgegebenen Emissionsspektren.

Mit dem erfindungsgemäßen Verfahren ist es möglich, Raubkopien oder Nachahmungen von Produkten oder Informationsträgern aller Art, Beschaffenheit oder Verwendung vom Original zu unterscheiden. Dieses ist insbesondere auf die Verwendung eines oder mehrerer lumineszierender Pigmente, die in diesem Sicherheitselement enthalten sind, zurückzuführen. Das Verfahren kann zum Nachweis entweder von strukturloser sowie von strukturierter Pigmentierung von Produkten aller Art, Beschaffenheit oder Verwendung wie zum Beispiel von Kunststoffen, Baumaterialien, Gummimassen, Farblacken, Papierrohmassen, Spezialgläsern, Explosivstoffen und Klebstoffen oder zur Oberflächenbeschichtung von Banknoten, Wertpapieren, Kredit- oder EC-Karten, Ausweisen, Pässen, Kundenkarten, Urkunden, Briefmarken, Eintrittskarten, CDs, DVDs, Verpackungen, Kunst- und Naturfasern, Geweben und Gelegen (Nonwoven), Holz, Oberflächenbeschichtungen, Keramik, Pflanzen und Tieren sowie daraus hergestellten Produkten, einschließlich Fasern, Leder, Geweben und Gelegen, pharmazeutischen Produkten und Ähnliches verwendet werden. Zur Identifizierung eines Gegenstandes oder Produktes unter Verwendung des erfindungsgemäßen Verfahrens enthält dieser Gegenstand ein Sicherheitselement, welches ein oder mehrere anorganische Lumineszenzpigmente enthält.

Der Begriff des Sicherheitselements kann im Rahmen dieser Erfindung auch bedeuten, dass das Sicherheitselement ausschließlich aus einem oder mehreren anorganischen Lumineszenzpigmenten besteht.

Bei dem zu identifizierenden Gegenstand kann es sich um ein Produkt von beliebiger Art, Beschaffenheit oder Verwendung handeln, wie diese bereits oben aufgeführt wurden. In Abhängigkeit von Art, Beschaffenheit und Verwendungszweck kann das Sicherheitselement unmittelbar in diesen Gegenstand eingearbeitet sein, beispielsweise den Ausgangsmaterialien beigemischt sein. Es ist auch möglich, das Sicherheitselement in Form eines Druckelements aufzubringen, hierbei sind alle relevanten Druckverfahren, wie Flach-, Tief-, Hoch- und Durchdruck, Siebdruck, Gasphasendeposition, Farbgebungsverfahren, Lackierverfahren, Lack-, Farb- und Tintenapplikationen möglich.

Das im erfindungsgemäßen Verfahren eingesetzte Sicherheitselement enthält mindestens ein anorganisches lumineszierendes Pigment oder besteht daraus, wobei das Emissionsspektrum des Pigments dergestalt ist, dass es quasi den Fingerabdruck des zu identifizierenden Produktes darstellt. Das Lumineszenzpigment weist vorzugsweise eine mittlere Teilchengröße von 1 nm bis 1.000 µm, vorzugsweise von 1 nm bis 100 µm und insbesondere von 10 nm bis 10 µm auf. Besonders bevorzugt liegen die Teilchen als nahezu sphärische Partikel vor. In einer bevorzugten Ausführungsform ist das Lumineszenzpigment eine anorganische Festkörperverbindung, die entweder selbstaktiviert ist, d.h. Donor-Akzeptor-Lumineszenz oder Charge-Transfer-Lumineszenz zeigt (intrinsische Lumineszenz), oder mit einem oder mehreren lumineszierenden Ionen aus der Gruppe In⁺, Sn²⁺, Pb²⁺, Sb³⁺, Bi³⁺, Ce³⁺, Ce⁴⁺, Pr³⁺, Nd³⁺, Sm²⁺, Sm³⁺, Eu²⁺, Eu³⁺, Gd³⁺, Tb³⁺, Dy³⁺, Ho³⁺, Er³⁺, Tm²⁺, Tm³⁺, Yb²⁺, Yb³⁺, Ti³⁺, V²⁺, V³⁺, V⁴⁺, Cr³⁺, Mn²⁺, Mn³⁺, Mn⁴⁺, Fe³⁺, Fe⁴⁺, Fe⁵⁺, Co³⁺, Co⁴⁺, Ni²⁺, Cu⁺, Ru²⁺, Ru³⁺, Pd²⁺, Ag⁺, Ir³⁺, Pt²⁺ und Au⁺ aktiviert ist (extrinsische Lumineszenz).

Die anorganische Festkörperverbindung ist ein binäres, ternäres oder quaternäres Halogenid, Oxid, Oxyhalogenid, Sulfid, Oxysulfid, Sulfat, Oxysulfat, Nitrid, Oxynitrid, Nitrat, Oxynitrat, Phosphid, Phosphat, Halophosphat, Carbonat, Silikat, Halosilikat, Oxysilikat, Vanadat, Molybdat, Wolframat, Germanat oder Oxygermanat der Elemente Li, Na, K, Rb, Mg, Ca, Sr, Sc, Y, La, Ti, Zr, Hf, Nb, Ta, Zn, Gd, Lu, Al, Ga und In.

Bevorzugte Festkörperverbindungen sind Me(S, Se) (Me = Mg, Ca, Sr, Ba, Zn, Cd), Ln₂O₂S (Ln = Y, La, Gd, Lu), MgO, ZnO, Sc₂O₃, Y₂O₃, La₂O₃, Gd₂O₃, Lu₂O₃, TiO₂, ZrO₂, HfO₂, Nb₂O₅, Ta₂O₅, Al₂O₃, Ga₂O₃, In₂O₃, SiO₂, GeO₂, SnO₂, LnBO₃ (Ln = Sc, Y, La, Gd, Lu), Ln(BO₂)₃ (Ln = Sc, Y, La, Gd, Lu), Me₃(BO₃)₂ (Me = Mg, Ca, Sr), MeB₄O₇ (Me = Ca, Sr, Ba), Me₃Ln(BO₃)₃ (Me = Ca, Sr, Ba und Ln = Y, Gd, Lu), LnMgB₅O₁₀ (Ln = Y, La, Gd, Lu), LnAl₃(BO₃)₄ (Ln = Y, La, Gd, Lu), MeAl₂O₄ (Me = Mg, Ca, Sr, Ba), MeAl₁₂O₁₉ (Me = Ca, Sr, Ba), Me₄Al₁₄O₂₅ (Me = Sr, Ba), Ln₃Me₅O₁₂ (Ln = Y, Gd, Lu und Me = Al, Ga, Sc), Me₃Al₂Si₃O₁₂ (Me = Mg, Ca), Me₃Ln₂Ge₃O₁₂ (Ln = Y, Gd, Lu und Me = Sr, Ba), MeMgAl₁₀O₁₇ (Me = Ca, Sr), MeAlO₂ (Me = Li, Na, K), LiM₅O₈ (M = Al, Ga, In), LnMgAl₁₁O₁₉ (Ln = La, Gd), LnAlO₃ (Ln = Y, La, Gd, Lu), LnGaO₃ (Ln = La, Gd, Lu), LnlnO₃ (Ln = La, Gd, Lu), Mg₂TiO₄, MeTiO₃ (Me = Mg, Ca, Sr, Ba), Ln₂Ti₂O₇ (Ln = Y, La, Gd, Lu), Ln₂Zr₂O₇ (Ln = Y, La, Gd, Lu), MeSiO₃ (Me = Ca, Sr, Ba), Me₂SiO₄ (Me = Ca, Sr, Ba), Me₃SiO₅ (Me = Ca, Sr, Ba), MeSi₂O₅ (Me = Sr, Ba), MeLi₂SiO₄ (Me = Ca, Sr), Ln₂SiO₅ (Ln = Al, Y, La, Gd, Lu), Ln₂Si₂O₇ (Ln = Y, La, Gd, Lu), NaLnSiO₄ (Ln = Al, Y, La, Gd, Lu), MeSi₂N₂O₂ (Me = Ca, Sr, Ba), MeAlSiN₃ (Me = Ca, Sr, Ba), Me₂Si₅N₈ (Me = Ca, Sr, Ba), Me₂Si₃Al₂N₆O₂ (Me = Ca, Sr, Ba), La₃Si₆N₁₁, LaSi₃N₅, MeYSi₄N₇ (Me = Sr, Ba), MeGe₂O₅ (Me = Ca, Sr, Ba), MeGe₄O₉ (Me = Ca, Sr, Ba), Mg₈Ge₂O₁₁F₂, MeMO₄, (Me = Mg, Ca, Sr, Ba und M = Mo, W), Ln₂MO₆ (M = Mo, W und Ln = Y, La, Gd, Lu), Ln₂M₂O₉ (M = Mo, W und Ln = Y, La, Gd, Lu), Ln₂M₃O₁₂ (M = Mo, W und Ln = Y, La, Gd, Lu), MeLnM₂O₈ (Me = Li, Na, K, Rb und M = Mo, W und Ln = Y, La, Gd, Lu), LnMO₄ (M = P, V, Nb, Ta und Ln = Sc, Y, La, Gd, Lu), Me₂M₂O₇ (M = P, V, Nb, Ta und Me = Ca, Sr, Ba) oder geeignete Mischkristalle dieser Verbindungen untereinander.

Die Pigmente können in an sich bekannter Weise als Sicherheitspigmente gemäß der vorliegenden Erfindung eingesetzt werden, beispielsweise in Form der Verbindungen, in einer Matrix oder auf eine Trägermaterial aufgebracht, in Form eines Lackes, Farbe, Suspension, Dispersion, kolloidale Lösung, Tinte, Paste usw.

Zur Durchführung des erfindungsgemäßen Verfahrens wird zunächst ein Emissionsspektrum des Lumineszenzpigments erzeugt. Das Erzeugen des Emissionsspektrums kann auf eine beliebige dem Fachmann bekannte Weise erfolgen, beispielsweise durch eine diskrete Anregungsenergie und/oder Temperatur. Das Erzeugen des Emissionsspektrums sollte unter definierten Anregungsbedingungen erfolgen. Vorzugsweise enthält das verwendete Sicherheitselement ein oder mehrere Lumineszenzpigmente, dessen/deren Emissionsspektrum/Emissionsspektren sich als Funktion von der Energie der anregenden elektromagnetischen Strahlung, der Temperatur, der Zeit nach dem Einwirken des Anregungspulses oder des Umgebungsdrucks ändert/ändern.

Erfindungsgemäß werden mindestens 2 voneinander verschiedene Emissionsspektren aufgenommen, wobei diese Spektren erhalten werden können mit voneinander verschiedenen Anregungspulsen und/oder als Funktion von der Zeit, d.h. Zeitabständen von Einwirken des Anregungspulses und/oder Änderung des Umgebungsdrucks. Diese Ausführungsform umfasst die Ausgestaltung, dass 2 unterschiedliche Emissionsspektren von einem Lumineszenzpigment oder 1 oder mehrere Emissionsspektren von 2 oder mehr Lumineszenzpigmenten erzeugt werden.

In einer möglichen Ausführungsform der vorliegenden Erfindung wird das verwendete Lumineszenzpigment in eine UV-transparente Matrix eingebracht. Diese Verfahrensweise hat den Vorteil, dass eine UV-Strahlungsquelle zum Nachweis der Sicherheitspigmente genutzt werden kann. Vorzugsweise wird als UV-transparente Matrix eine photonische Matrix eingesetzt, beispielsweise ein inverser Opal, wie ein inverser SiO₂-Opal.

Das bzw. die erzeugten Emissionsspektren werden im zweiten Verfahrensschritt mit dem/den für das/die im Sicherheitselement enthaltenen Lumineszenzpigment(e) vorgegebene(n) Spektrum/Spektren abgeglichen. Es wird das erzeugte Emissionsspektrum mit dem unter denselben Anregungsbedingungen vorbekannten Spektrum des jeweiligen Lumineszenzpigments abgeglichen. Stimmen die Spektren überein, kann die Echtheit des identifizierten Gegenstandes bestätigt werden. Das Aufnehmen und Abgleichen des erzeugten Emissionsspektrums mit dem vorgegebenen Spektrum erfolgt vorzugsweise automatisch. Dazu wird das erzeugte Emissionsspektrum digital erfasst. Das digital erfasste Spektrum kann anschließend mit dem für das im Sicherheitselement enthaltenden Lumineszenzpigment vorgegebene Spektrum verglichen werden. Das Vergleichen kann auf verschiedene Weisen erfolgen. Ist das identifizierende Produkt bzw. das für dieses Produkt verwendete Lumineszenspigment bekannt, kann das erzeugte Spektrum direkt mit dem entsprechenden vorgegebenen Spektrum verglichen werden. Mit dem erfindungsgemäßen Verfahren können auch Produkte identifiziert werden, deren Herkunft nicht bekannt ist. In einer derartigen Fallgestaltung werden ein oder mehrere Emissionsspektren erzeugt. Das bzw. die Spektren werden mit vorbekannten Spektren abgeglichen und über den Vergleich kann eine Zuordnung zu einem bestimmten Produkt erfolgen.

Um den Abgleich der erzeugten Spektren mit den vorgegebenen Spektren zu erleichtern, sind die vorgegebenen Spektren vorzugsweise in einer elektronischen Datenbank hinterlegt, und das erzeugte Spektren kann über entsprechende elektronische Medien und Datenverarbeitungsprogramme mit den in der Datenbank hinterlegten Spektren verglichen werden. Das Abgleichen der Spektren kann auch manuell erfolgen.

In einer möglichen Ausgestaltung wird zunächst ein Emissionsspektrum erzeugt, dieses wird mit den bekannten, ggf. in der Datenbank hinterlegten Spektren, verglichen. Wird eine Übereinstimmung der Spektren festgestellt, kann zur Bestätigung des Ergebnisses ein zweites vom ersten Spektrum unterschiedliches Spektrum erzeugt und dem vorgegebenen zweiten Spektrum verglichen werden.

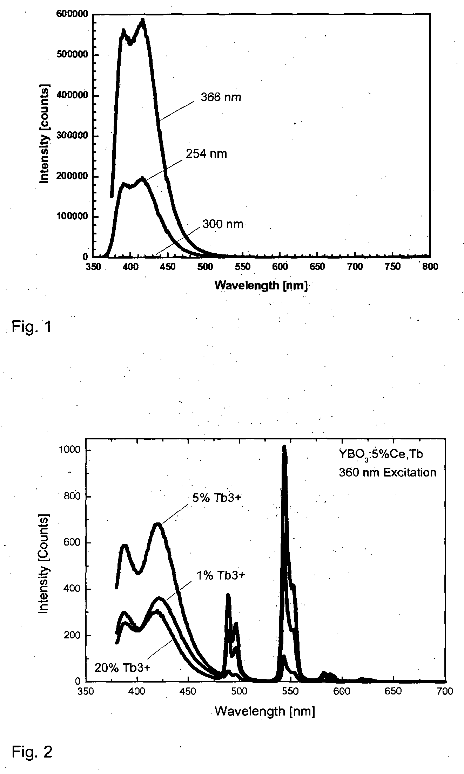

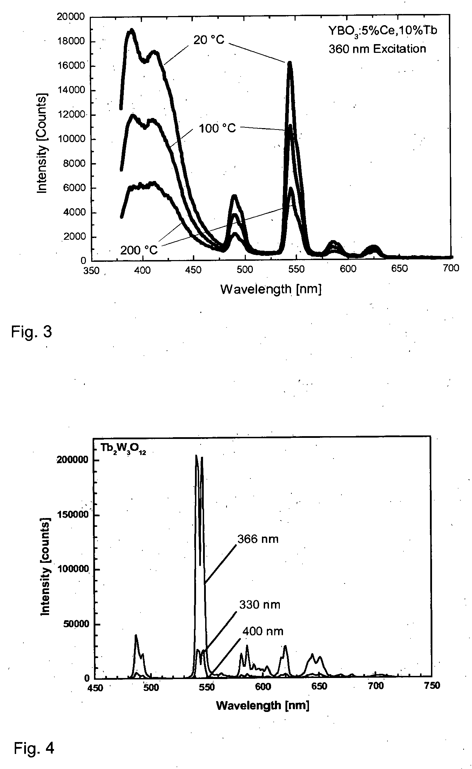

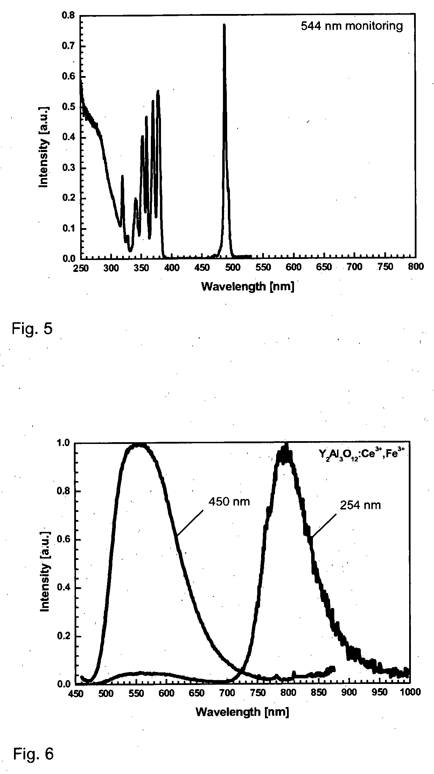

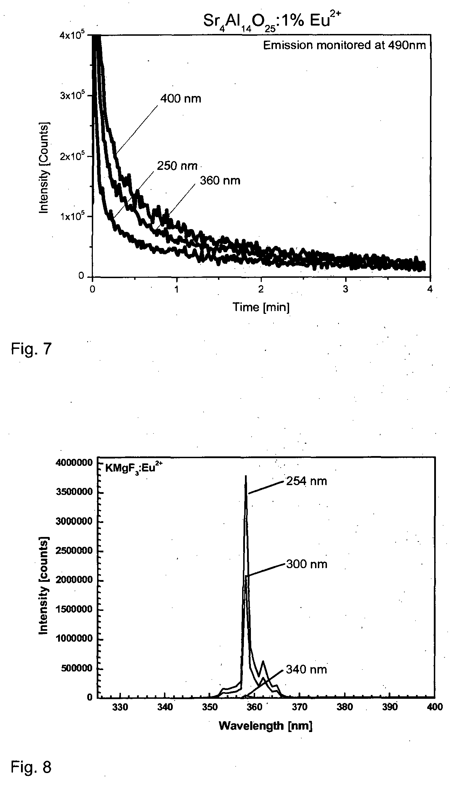

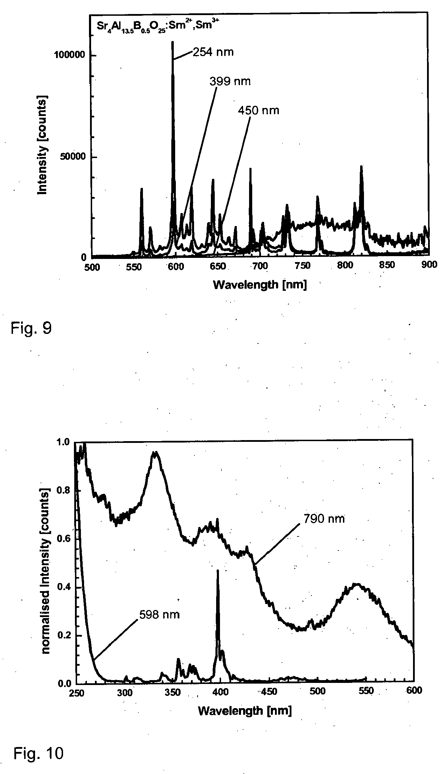

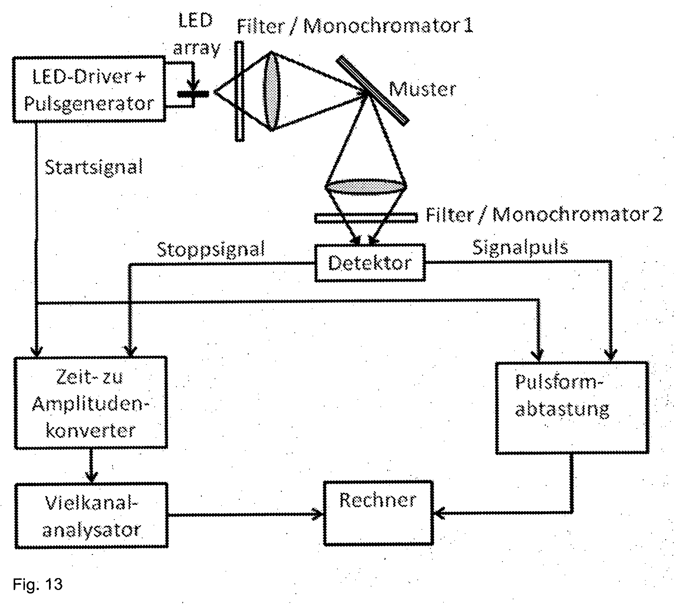

Eine extrem hohe Variabilität des Emissionsspektrum des Sicherheitselements und damit eine hohe Einzigartigkeit für eine Vielzahl unterschiedlicher Produkte können beispielsweise durch folgende im Einzelnen oder als eine Kombination von zwei oder mehreren Maßnahmen erreicht werden:
a) Einsatz von mindestens zwei lumineszierenden Pigmenten, wobei mindestens eines der beiden Pigmente ein Emissionsspektrum aufweist, dessen Intensität und ggf. auch spektrale Energieverteilung von der Anregungswellenlänge abhängt (Fig. 1 und 4). Die geforderte starke Abhängigkeit der Intensität bedeutet, dass das Anregungsspektrum stark strukturiert sein muss, wie z.B. das von Tb₂W₃O₁₂ (Fig. 5).
b) Einsatz von mindestens einem lumineszierenden Pigment, das mindestens zwei Arten von Lumineszenzzentren enthält, wobei die beiden Lumineszenzzentren als Dotierungen eingebracht werden, wie z.B. in YBO₃:Ce,Tb oder Y₃Al₅O₁₂:Ce,Fe. Die resultierenden Emissionsspektren derartiger Leuchtstoffe sind naturgemäß abhängig vom Konzentrationsverhältnis der beiden Dotierionen (Fig. 2 und 6). Damit erhält man Lumineszenzpigmente, dessen Emissionsspektren von der Anregungswellenlänge und darüber hinaus auch von der Temperatur abhängig sind, da der Energietransfer zwischen den unterschiedlichen Aktivatorionen temperaturabhängig ist (Fig. 3).
c) Einsatz von mindestens einem lumineszierenden Pigment, das langanhaltende Lumineszenz (Phosphoreszenz) nach dem Anregungspuls zeigt (Fig. 7), wie z.B. das Lumineszenzpigment Sr₄Al₁₄O₂₅:Eu,Dy. Damit erhält das Emissionsspektrum des Sicherheitselementes eine zeitabhängige Komponente, die zudem noch von der Anregungswellenlänge abhängig ist.
d) Einsatz von mindestens einem lumineszierenden Pigment, das durch eine Druckänderung Lumineszenz zeigt (Mechano- bzw. Sonolumineszenz) oder sein Emissionsspektrum ändert, d.h. druckabhängige Lumineszenzspektren zeigt.
e) Einsatz von mindestens einem lumineszierenden Pigment, das dadurch gekennzeichnet ist, dass es einen redoxbistabilen Aktivator, d.h. in zwei Oxidationsstufen, enthält. Als Folge davon ist sowohl das Emissionsspektrum als auch das Abklingverhalten sehr stark von der Anregungswellenlänge abhängig. Darüber hinaus ist der relative Anteil der beiden Oxidationsstufen stark von der Präparation des Pigmentes abhängig, wodurch eine Nachahmung genaue Kenntnis der Präparationsbedingungen erfordert. Redoxbistabile Aktivatoren sind Cr^{3+/4+}, Mn^{2+/4+}, Pb^{2+/4+}, Cm^{3+/4+}, Pr^{3+/4+}, Sm^{2+/3+}, Eu^{2+/3+}, Tm^{2+/3+} sowie Yb^{2+/3+} (Fig. 9 bis 12).
f) Einsatz von mindestens einem lumineszierenden Pigment, das ausschließlich im UV oder im NIR-Bereich Strahlung emittiert (Fig. 8), wodurch ein verdecktes Sicherheitselement möglich wird.
g) Einsatz von mindestens einem lumineszierenden Pigment, das bei der Anregung im NIR-Bereich sichtbare oder UV Lumineszenz, d.h. Up-Conversion, zeigt. Geeignete Up-Converter sind z.B. NaYF₄:Yb,Pr, NaYF₄:Yb,Tm oder NaYF₄:Yb,Er (Fig. 13).

Ein wesentliches Merkmal des eingesetzten Sicherheitselements bzw. der darin enthaltenen Lumineszenzpigmente ist, dass diese Pigmente nach geeigneter Anregung ein spezifisches Emissionsspektrum erzeugen, das als optischer Fingerabdruck dienen kann. Vorzugsweise werden solche Lumineszenzpigmente eingesetzt, dessen Emissionsspektren sich als Funktion von der spektralabhängigen Anregungsenergie, der Temperatur, der Zeit nach Einwirken des Anregungspulses und/oder des Umgebungsdrucks ändert. In einer möglichen Ausführungsform der vorliegenden Erfindung wird zur Erzeugung des Emissionsspektrums die Anregungsenergie moduliert, wobei mit dieser Modulation eine Änderung des Emissionsspektrums des Sicherheitselements einhergeht. In weiteren Ausführungsformen der vorliegenden Erfindung kann die Generierung des Emissionsspektrums auf der zeitlich modulierten Anregung oder Emission der Lumineszenzpigmente und/oder auf der thermisch modulierten und/oder durch Druck modulierten Anregung oder Emission von Lumineszenzpigmenten beruhen. In einer besonders bevorzugten Ausführungsform ist es möglich, eine oder mehrere Anregungsform(en) zu modulieren, sodass das erhaltene Emissionsspektrum auf einer Kombination durch zeitlich, thermisch, druck- und/oder energieabhängige (wie von der Strahlungswellenlänge) Anregung modulierte Emission der Lumineszenzpigmente beruht.

Die Detektion des Sicherheitselementes erfolgt vorzugsweise durch ein Detektionssystem, das mit anorganischen oder organischen LEDs als Primärlichtquelle arbeitet. Die Verwendung von LEDs in einem System zum Nachweis oder zur Charakterisierung lumineszierender Substanzen ist erstmalig 1997 beansprucht worden [9]. Die LEDs können im UV (210 - 400 nm), im sichtbaren (400 - 700 nm) oder im nahen Infrarotbereich (700 - 1800 nm) emittieren. Ggbf. kann das Detektionssystem auch zwei LEDs oder ein polychromatisches LED-Array enthalten, so dass das Spektrum der Primärlichtquelle variabel oder sogar frei durchstimmbar ist.

Im Falle einer zeitlichen modulierten Detektion der Emissionsspektren des erfindungsgemäßen Sicherheitselementes wird ein Pulsgenerator benötigt und ein Detektionssystem, dass in der Lage ist, Emissionsspektren als Funktion der Zeit nach dem Anregungspuls aufzunehmen (Abb. 13).

Im Falle einer thermisch modulierten Detektion des Emissionsspektrums des erfindungsgemäßen Sicherheitselementes wird das Produkt mit dem Sicherheitselement in eine temperierbare Kammer eingebracht oder der Informationsträger auf einen heizbaren Probenhalter gebracht, und das Emissionsspektrum z.B. bei 25 °C und danach bei 50 °C oder noch höheren Temperaturen aufgenommen.

Ein weiterer Gegenstand der vorliegenden Erfindung ist ein Sicherheitselement mit verdecktem oder offenem Sicherheitsmerkmal zu seiner Identifizierung, welches ein oder mehrere anorganische Lumineszenzpigmente enthält, wobei für jedes Lumineszenzpigment mindestens ein Emissionsspektrum als Funktion von der spektralen Anregungsenergie, der Temperatur, der Zeit nach dem Einwirken des Anregungspulses oder des Umgebungsdrucks erzeugt werden kann mit der Maßgabe dass, wenn nur ein Lumineszenzpigment enthalten ist, mindestens zwei voneinander verschiedene Emissionsspektrum erzeugt werden können.

Das bedeutet, dass, wenn das Sicherheitslement X anorganische Lumineszenzpigmente enthält mit X ≥ 1, wobei X = N - 1 ist, die aus einer Menge mit N Elementen stammen und jedes Element ein Lumineszenzpigment mit von allen anderen Lumineszenzpigmenten der Menge unterschiedlichen Emissionsspektrum darstellt, auf diese Weise sich (N!)/[X!·(N-X)!)] spektral unterschiedliche Sicherheitselemente ergeben. Eine derartige Ausgestaltung ermöglicht es, die originäre Herkunft eines Produktes mit hoher Sicherheit festzustellen.

In einer bevorzugten Ausführungsform enthält das erfindungsgemäße Sicherheitselement mindestens zwei oder auch mehrere Lumineszenzpigmente, wobei vorzugsweise mindestens eines der enthaltenen Lumineszenzpigmente ein Emissionsspektrum zeigt, das sich als Funktion der spektralen Anregungsenergie, der Temperatur, der Zeit nach dem Anregungspuls und des Umgebungsdrucks ändert.

Ein weiterer Gegenstand der vorliegenden Erfindung ist die Verwendung des Sicherheitselements zur Identifizierung von Produkten, beispielsweise von Kunststoffen (Elastomere, Thermoplaste, Duroplaste, Schaumstoffe, Harze, Baumaterialien, Kautschuk- und Gummimassen, Farblacken, Papierrohmassen, Spezialgläsern, Keramikprodukten und keramischen Materialien, Explosivstoffen, Klebstoffen, Papieren einschließlich Wert- und Sicherheitsdokumenten, wie Banknoten und Wertpapieren, Kreditkarten, EC-Karten, Ausweisen, Passdokumenten, Kundenkarten, Urkunden, Briefmarken, Eintrittskarten, Audio- und Video-Medien, Verpackungen, Kunst- und Naturfasern, Geweben und Gelegen (Nonwoven), Holz, Oberflächenbeschichtungen, Keramik, Pflanzen und Tieren sowie daraus hergestellten Produkten, einschließlich Fasern, Leder, Geweben und Gelegen, pharmazeutischen Produkten und Geräten usw. Zusammenfassend lassen sich unter Verwendung des erfindungsgemäßen Sicherheitselements und des oben beschriebenen erfindungsgemäßen Verfahrens beliebige Stoffe, Geräte und Vorrichtungen mit einem Sicherheitselement versehen und entsprechend identifizieren.

Das Sicherheitselement, d.h. das bzw. die anorganischen Lumineszenzpigmente können in an sich bekannter Weise in die zu markierenden Materialien eingearbeitet oder aufgebracht werden.

Das erfindungsgemäße Sicherheitselement kann über die Identifizierung des Produktes hinaus noch weitere Funktionen übernehmen. Nach Identifizierung des Sicherheitselementes ist es möglich, das Produkt nicht nur auf Echtheit zu prüfen, das Sicherheitselement kann auch die Funktion eines Typenschilds übernehmen. Sobald durch Überprüfen des Emissionsspektrums festgestellt wurde, dass der zu identifizierende Gegenstand ein Originalprodukt ist, d. h. keine Fälschung, so können über die Verknüpfung des Emissionsspektrums mit weiteren Produktangaben diese Angaben zur Herstellung, Inhaltsstoffen, Garantie- oder Ablaufdaten. Serviceinformationen, Bedieninformationen einschließlich Informationen zum Produkttyp und zur Charge erhalten werden.

Das erfindungsgemäße Verfahren lässt sich ohne weiteres mit bestehenden Verfahren zur Produktidentifizierung kombinieren, wie Barcode, DataGrid, DataMatrix, Hologrammen, Infrarot-Merkmalen, QR-Code, CDP, RFID, und/oder auf der Verpackung aufgebrachte Kennzeichnungen zur Speicherung von Produktions- und Transportdaten.

Das erfindungsgemäße Verfahren kann mit einer Vorrichtung zum Identifizieren eines Gegenstandes durchgeführt werden, welche umfasst
- Mittel zum Erzeugen eines Anregungspulses,
- Einen Detektor zum Aufnehmen eines Emissionsspektrums.

Die Vorrichtung kann als weitere Mittel Mittel zur Wiedergabe des Emissionsspektrums und Mittel zum Vergleichen des aufgenommen Emissionsspektrums mit einem vorgegebenen Spektrum aufweisen oder mit geeigneten Vorrichtungen, die über diese Mittel verfügen, über entsprechenden Datenleitungen und -Verbindungen verbunden sein.

Mit der Vorrichtung ist es möglich, auf einfache Art und Weise einen Gegenstand zu identifizieren, beispielsweise auf seine Echtheit hin zu überprüfen, um zu bestätigen, dass es sich um ein sogenanntes Originalprodukt handelt. Mit der erfindungsgemäßen Vorrichtung wird zunächst ein Anregungspuls erzeugt, welcher bei Vorhandensein von Lumineszenzpigmenten ein Emissionsspektrum erzeugt. Um das erzeugte Emissionsspektrum aufnehmen zu können, enthält die Vorrichtung einen Detektor. Mithilfe des Detektors wird das Emissionsspektrum aufgenommen und gegebenenfalls unmittelbar in der Vorrichtung abgespeichert. Es ist auch möglich, dass das aufgenommene Spektrum mittels entsprechender Datenübertragungssysteme an einen externen Server oder entsprechende externe Vorrichtung geleitet und ggf. dort gespeichert wird.

Das aufgenommene Spektrum kann, sofern diese Mittel zur Wiedergabe des Emissionsspektrums enthält, direkt von der Vorrichtung wiedergegeben werden. Es ist auch möglich, das aufgenommene Spektrum auf einem externen, über entsprechende Datenleitungen oder-verbindungen verbundenen Vorrichtung wiederzugeben.

Im nächsten Schritt wird das aufgenommene Spektrum entweder, sofern die Vorrichtung entsprechende Mittel aufweist, mit einem vorgegebenen Emissionsspektrum verglichen. In einer weiteren Ausgestaltung ist es auch möglich, dass der Vergleich des aufgenommenen Emissionsspektrums mit dem vorgegebenen Spektrum nicht auf der Vorrichtung erfolgt, sondern auf einer externen Vorrichtung, die z. B. über eine entsprechende Datenbank von vorgegebenen Emissionsspektren verfügt und mit einer solchen Datenbank verbunden ist. In einer derartigen Ausgestaltung kann die Mitteilung, ob der Gegenstand als "echt" identifiziert wird oder ob es sich um einen anderen als den erwarteten Gegenstand handelt, als entsprechende Mitteilung von dem externen Gerät an die Vorrichtung erfolgen.

In einer weiteren möglichen Ausführungsform kann das aufgenommene Emissionsspektrum auch auf einem geeigneten Speichermedium gespeichert und auf ein weiteres Gerät, welches das Emissionsspektrum wiedergibt oder intern direkt mit einem vorgegebenen Emissionsspektrum vergleicht, übertragen werden. Die Übertragung über Datenleitungen ist jedoch bevorzugt.

### Beispiele

Im Folgenden soll die Erfindung anhand von sechs Ausführungsformen näher erläutert werden, wobei die Sicherheit im Sinne des Kopierschutzes von Beispiel 1 nach Beispiel 6 hin ansteigt.
1. Ein Sicherheitselement bestehend aus zwei lumineszierenden Pigmenten, wobei beide Pigmente aus einem Ln₃Me₅O₁₂ Granat-Wirtsgitter (Ln = Y, Gd, Lu und Me = Al, Ga, Sc, Si, Mg), bestehen, die jeweils mit einem der oben genannten lumineszierenden Ionen dotiert sind. Verwendet man ausschließlich Y₃Al₅O₁₂, das mit jeweils einem trivalenten Lanthanoidion dotiert ist, so erhält man bei Verwendung gleicher Mengen beider Pigmente 45 Kombinationsmöglichkeiten gemäß der folgenden Tabelle.

**Tab. 1: Darstellung der 45 möglichen Kombinationen, wenn man zwei YAG-Leuchtstoffe, die mit jeweils unterschiedlichen Aktivatorionen dotiert sind, für das Sicherheitselement verwendet.**

| **Y₃Al₅O₁₂** | **Pr³⁺** | **Nd³⁺** | **Sm³⁺** | **Eu³⁺** | **Tb**³⁺ | **Dy³⁺** | **Ho³⁺** | **Er³⁺** | **Tm³⁺** | **Yb³⁺** |
|---|---|---|---|---|---|---|---|---|---|---|
| **Pr³⁺** | - | + | + | + | + | + | + | + | + | + |
| **Nd³⁺** | + | - | + | + | + | + | + | + | + | + |
| **Sm³⁺** | + | + | - | + | + | + | + | + | + | + |
| **Eu³⁺** | + | + | + | - | + | + | + | + | + | + |
| **Tb³⁺** | + | + | + | + | - | + | + | + | + | + |
| **Dy³⁺** | + | + | + | + | + | - | + | + | + | + |
| **Ho³⁺** | + | + | + | + | + | + | - | + | + | + |
| **Er³⁺** | + | + | + | + | + | + | + | - | + | + |
| **Tm³⁺** | + | + | + | + | + | + | + | + | - | + |
| **Yb³⁺** | + | + | + | + | + | + | + | + | + | - |

2. Variiert man nun auch noch die Mengenverhältnisse in 5% Schritten, gemäß 5-95, 10-90, 15-85 bis 95-5, so erhält man weitere 19 unterschiedliche Emissionsspektren und somit insgesamt 855 Varianten. Die Zahl lässt sich naturgemäß weiter erhöhen, wenn man drei oder noch mehr Lumineszenzpigmente verwendet. Die Anregung des Sicherheitselementes erfolgt mit einer Entladungslampe und/oder mit einer LED, die bei den Standardwellenlängen 254 oder 366 nm emittieren.
Ein Sicherheitselement bestehend aus X anorganischen Lumineszenz-pigmenten (mit X = 10 - 1), die aus einer Menge mit 10 Lumineszenz-pigmenten stammen, wobei diese Menge beispielsweise die Lumineszenz-pigmente Y₃Al₅O₁₂:Pr, Y₃Al₅O₁₂:Nd, Y₃Al₅O₁₂:Sm, Y₃Al₅O₁₂:Eu, Y₃Al₅O₁₂:Tb, Y₃Al₅O₁₂:Dy, Y₃Al₅O₁₂:Ho, Y₃Al₅O₁₂:Er, Y₃Al₅O₁₂:Tm, und Y₃Al₅O₁₂:Yb, enthält. Die Emissionsspektren dieser Lumineszenzpigmente sind derart unterschiedlich, dass sie mit einem einfachen optischen Spektrometer diskriminiert werden können. Somit ergeben sich insgesamt 1000 spektral unterschiedliche Sicherheitselemente. Die Anregung der Sicherheitselemente erfolgt mit einer Entladungslampe und/oder mit einer LED, die bei den Standardwellenlängen 254 oder 366 nm emittieren.
3. Ein Sicherheitselement mit zwei lumineszierenden Pigmenten, wobei eines der beiden Pigmente langanhaltende Lumineszenz (Nachleuchten) zeigt. Während das erste Pigment ein Y₃Al₅O₁₂:Ln (Ln = Ce, Pr, Nd, Sm, Eu, Gd, Tb, Dy, Ho, Er, Tm, Yb) mit kurzer Abklingzeit ist, stammt das zweite Pigment aus der Gruppe der Nachleuchtpigmente, insbesondere aus der Gruppe SrAl₂O₄:Eu,Dy, CaAl₂O₄:Eu,Nd, Sr₄Al₁₄O₂₅:Eu,Dy, Sr₂MgSi₂O₇:Eu,Dy, Sr₃MgSi₂O₈:Eu,Dy, CaMgSi₂O₆:Eu,Dy, Ba₃MgSi₂O₈:Eu,Dy, BaMg₂Al₆Si₉O₃₀:Eu,Dy, Sr₂Al₂SiO₇:Eu,Dy, Sr₂Al₁₀SiO₂₀:Eu,HoCaAl₂Si₂O₈:Eu,Dy, CaAl₂Si₂O₈:Eu,Pr, Sr₂SiO₄:Eu,Dy, Sr₂ZnSi₂O₇:Eu,Dy, CaS:Eu,Tm, CaGa₂S₄:Eu,Ho, CaGa₂S₄:Eu,Ce, Sr₂P₂O₇:Eu,Y, Ca₂P₂O₇:Eu,Y, Ca₂SiS₄:Eu,Nd oder Ca₂MgSi₂O₇:Eu,Tb, die mehrere Minuten oder gar Stunden Lumineszenz zeigen Damit lässt sich das zeitabhängige Verhalten der Emission zum Nachweis der Authentizität des Produktes heranziehen. Die Anregung des Sicherheitselementes erfolgt auch hier mit einer Entladungslampe und/oder mit einer LED, die bei den Standardwellenlängen 254 oder 366 nm emittieren.
4. Ein Sicherheitselement mit zwei lumineszierenden Pigmenten, wobei eines der beiden Pigmente einen redoxbistabilen Aktivator enthält. Während das erste Pigment ein Eu³⁺, Pr³⁺, oder Cr³⁺ dotiertes Sesquioxid, d.h. Al₂O₃, In₂O₃, Y₂O₃, Gd₂O₃, oder Lu₂O₃ ist, handelt es sich bei dem zweiten Pigment um ein Aluminat, das mit Sm²⁺ und Sm³⁺ dotiert ist, Sr₄Al_{13.5}B_{0.5}O₁₂:Sm. Die Anregung des Sicherheitselementes erfolgt hier einerseits mit einer Entladungslampe und/oder einer LED, die bei den Standardwellenlängen 254 oder 366 nm emittieren und andererseits mit einer Entladungslampe und/oder einer LED, die bei 400 oder 550 nm emittieren.
5. Ein verdecktes Sicherheitselement mit zwei lumineszierenden Pigmenten, wobei eines der beiden Pigmente Strahlung nur im UV oder nur im IR Bereich emittiert, so dass es für das menschliche Auge unsichtbar ist. Die Anregung des Sicherheitselementes erfolgt hier mit einer Entladungslampe und/oder einer LED, die schmalbandig bei 250 bis 550 nm emittiert.
6. Ein verdecktes Sicherheitselement mit zwei lumineszierenden Pigmenten, wobei das erste der beiden Pigmente Strahlung nur im UV emittiert und das zweite der beiden Pigmente Strahlung nur im IR Bereich emittiert, so dass beide für das menschliche Auge unsichtbar bleiben. Die Anregung des Sicherheitselementes erfolgt hier mit einer Entladungslampe und/oder einer LED, die schmalbandig bei 250 bis 550 nm emittiert.

### Einsatz in der Praxis

Identifizierung eines Arzneimittels, das Lumineszenzpigment gemäß Figur 1 ist für das menschliche Auge unsichtbar auf ein Arzneimittel A aufgebracht.

Zur Identifizierung wird ein Emissionsspektrum mittels eines Handgerätes aufgenommen, das aufgenommene Spektrum wird mit den Spektren der Datenbank, die sämtliche Spektren enthält, welche für die jeweiligen Produkte jeweils erzeugt wurden, abgeglichen. Bei Übereinstimmung wird die Identität des Arzneimittels bestätigt.

Sollte das Spektrum nicht eindeutig zuzuordnen sein, kann ein weiteres Spektrum beispielsweise bei einer anderen Anregungswellenlänge aufgenommen werden und ein Abgleich des zweiten Spektrums bzw. beider Spektren erfolgt über die Datenbank.

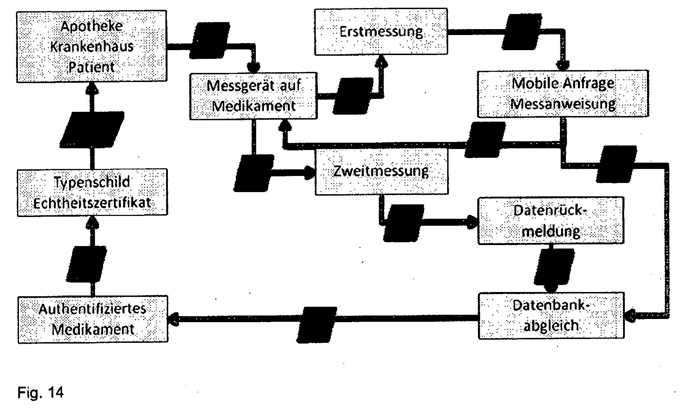

In Figur 14 ist ein Fließdiagramm über die mögliche Anwendung des erfindungsgemäßen Sicherheitselements zur Kennzeichnung eines Arzneimittels dargestellt.

Das Sicherheitselement kann zur Kennzeichnung von beliebigen pharmazeutischen Darreichungsformen, wie Dragees, Kapseln, Komprimate, Pellets, Pflaster, Tabletten, Zäpfchen aller Art eingesetzt werden. Bei Darreichungsformen, die nicht einzeln gekennzeichnet werden können, wird das Sicherheitselement vorzugsweise eingebracht (z.B. bei Pulvern) oder auf deren Verpackungen aufgebracht (z.B. klare Flüssigkeiten).

Um die Echtheit des Arzneimittels festzustellen und das Arzneimittel selbst zu identifizieren, wird das Sicherheitselement bzw. die Tablette mit einem geeigneten Gerät überprüft, welches Strahlen mit einer definierten Wellenlänge aussendet und das vom Sicherheitselement abgegebene Emissionsspektrum aufnimmt. Dieses Spektrum wird, üblicherweise über mobile Geräte, an eine Datenbank geschickt. In der Datenbank wird das erhaltene Spektrum abgeglichen. Sofern dieses Spektrum mit den zugehörigen Daten betreffend Wirkstoff und Hersteller oder ähnlichen Daten übereinstimmt, gibt die Datenbank eine positive Rückmeldung und eine zweite Messung bei einer definierten Anregungswellenlänge, die vorzugsweise von der Wellenlänge der ersten Messung unterschiedlich ist, wird durchgeführt. Das Emissionsspektrum der zweiten Messung wird ebenfalls der Datenbank gemeldet und mit den dort vorhandenen Spektren abgeglichen. Können beide Emissionsspektren dem gleichen Produkt zugeordnet werden, so meldet die Datenbank, dass das Medikament identifiziert werden konnte und bestätigt die Echtheit des Medikaments.

Gleichzeitig mit der Echtheit des Medikaments ist es möglich, dem Auftraggeber, d. h. dem Patienten, der Apotheke und/oder dem Krankenhaus, zu bestätigen, dass es sich um ein Originalmedikament handelt.

Sofern die Echtheit des Medikaments bestätigt werden konnte, können dem Kunden/Anwender auch zusätzliche Daten, die auf der Datenbank hinterlegt sind, übermittelt werden, wie Herstellungsdatum, Chargennummer, Haltbarkeitsdatum, etc.

Das Durchführen von einer Messung bietet eine sehr hohe Trefferwahrscheinlichkeit, die Fehlerquote liegt bei etwa 1 : 10000. Werden jetzt zwei Messungen durchgeführt, wird die Fehlerquote der ersten Messung um den Faktor 1 : 10000 weiter verringert, sodass bei einer Doppelmessung die Fehlerwahrscheinlichkeit 1 : 10⁸ beträgt.

### Beschreibung der Abbildungen und Zeichnungen:

- Fig. 1: zeigt die Emissionsspektren von YBO₃:Ce bei den Anregungswellenlängen 254, 300 und 366 nm.
- Fig. 2: zeigt die Emissionsspektren von YBO₃:Ce,Tb für drei verschiedene Terbiumkonzentrationen bei der Anregungswellenlänge 360 nm.
- Fig. 3: zeigt die Emissionsspektren von YBO₃:Ce,Tb als Funktion der Temperatur.
- Fig. 4: zeigt die Emissionsspektren von Tb₂W₃O,₂ bei den Anregungswellenlängen 330, 360 und 400 nm.
- Fig. 5: zeigt das Anregungsspektrum von Tb₂W₃O₁₂ für die 544 nm Emissionslinie.
- Fig. 6: zeigt die Emissionsspektren von Y₃Al₅O₁₂:Ce,Fe bei den Anregungswellenlängen 254 und 450 nm.
- Fig. 7: zeigt die Abklingkurven von Sr₄Al₁₄O₂₅:Eu bei den Anregungswellenlängen 250, 360 und 400 nm.
- Fig. 8: zeigt die Emissionsspektren von KMgF₃:Eu bei den Anregungswellenlängen 254, 300 und 340 nm.
- Fig. 9: zeigt die Emissionsspektren von Sr₄Al_{13.5}B_{0.5}O₂₅:Sm^{2+/3+} bei den Anregungswellenlängen 254, 399 und 450 nm.
- Fig. 10: zeigt die Anregungsspektren von Sr₄Al_{13.5}B_{0.5}O₂₅:Sm^{2+/3+} für die Emissionswellenlängen 598 und 750 nm.

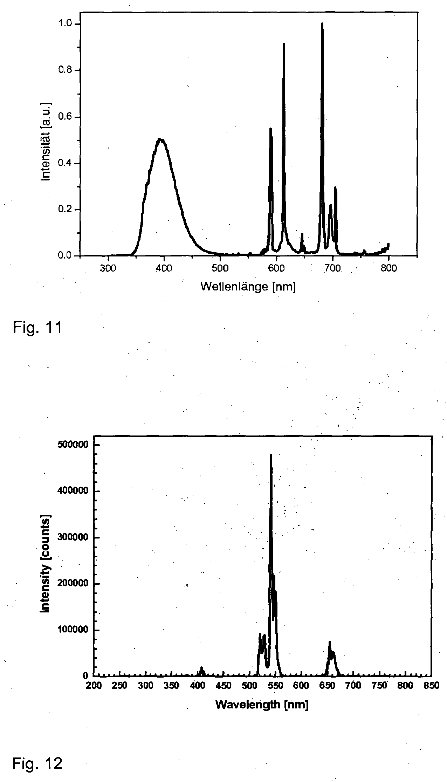

- Fig. 11: zeigt das Emissionsspektren von SrAl₁₂O₁₉:Eu^{2+/3+} bei der Anregungswellenlänge 270 nm.
- Fig. 12: zeigt das Emissionsspektren von NaYF₄:Yb,Er bei der Anregungswellenlänge 980 nm.
- Fig. 13: zeigt den schematischen Aufbau des erfindungsgemäßen Detektionssystems.
- Fig. 14: zeigt ein Fließdiagramm bzgl. eines möglichen Einsatzes des Sicherheitselements.

### Patentliteratur

- [1]: WO 2009/071167
- [2]: DE 19804032
- [3]: EP 1237128
- [4]: WO2004/081125
- [5]: US 2008/315574 = WO 2006/029431
- [6]: EP 1 241 021 A2
- [7]: DE 198 36 813 A1
- [8]: DE 202 21 282 U1
- [9]: EP 1 844 945

## Patentansprüche

1. Verfahren zur Identifizierung eines Gegenstandes, wobei der Gegenstand ein Sicherheitselement aufweist, das ein oder mehrere anorganische Lumineszenzpigmente enthält,
welches Verfahren die Schritte umfasst
- Erzeugen von mindestens zwei voneinander verschiedenen Emissionsspektren des/der verwendeten Lumineszenzpigments(e) unter definierten Anregungsbedingungen, wobei diese Spektren erhalten werden können mit voneinander verschiedenen Anregungspulsen und/oder das Abklingverhalten darstellen,
- Abgleichen der erhaltenen Emissionsspektren mit den für das/die Lumineszenzpigmente unter denselben Anregungsbedingungen erhaltenen vorgegebenen Emissionsspektren.

2. Verfahren nach Anspruch 1, **dadurch gekennzeichnet, dass** das Lumineszenzpigment eine anorganische Festkörperverbindung ist, das ein oder mehrere lumineszierende Ionen aus der Gruppe In⁺ Sn²⁺, Pb²⁺, Sb³⁺ Bi³⁺, Ce³⁺, Ce⁴⁺, Pr³⁺, Nd³⁺, Sm²⁺, Sm³⁺, Eu²⁺, Eu³⁺, Gd³⁺, Tb³⁺, Dy³⁺, Ho³⁺, Er³⁺, Tm²⁺, Tm³⁺ Yb²⁺, Yb³⁺, Ti³⁺, V²⁺, V³⁺, V⁴⁺ Cr³⁺, Mn²⁺, Mn³⁺, Mn⁴⁺, Fe³⁺, Fe⁴⁺, Fe⁵⁺, Co³⁺, Co⁴⁺, Ni²⁺, Cu⁺, Ru²⁺, Ru³⁺, Pd²⁺, Ag⁺, Ir³⁺, Pt²⁺ und Au⁺ enthält.

3. Verfahren nach einem der Ansprüche 1 oder 2, **dadurch gekennzeichnet, dass** das Lumineszenzpigment ein binäres, ternäres oder quaternäres Halogenid, Oxid, Oxyhalogenid, Sulfid, Oxysulfid, Sulfat, Oxysulfat, Selenid, Nitrid, Oxynitrid, Nitrat, Oxynitrat, Phosphid, Phosphat, Carbonat, Silikat, Oxysilikat, Vanadat, Molybdat, Wolframat, Germanat oder Oxygermanat der Elemente Li, Na, K, Rb, Mg, Ca, Sr, Sc, Y, La, Ti, Zr, Hf, Nb, Ta, Zn, Gd, Lu, Al, Ga und In ist.

4. Verfahren nach einem der Ansprüche 1 bis 3, **dadurch gekennzeichnet, dass** das anorganische Lumineszenzpigment in eine UV-transparente Matrix eingebracht ist.

5. Verfahren nach Anspruch 4, **dadurch gekennzeichnet, dass** die UV-transparente Matrix eine photonische Matrix, wie ein inverser Opal, ist.

6. Verfahren nach einem der Ansprüche 1 bis 5, **dadurch gekennzeichnet, dass** das Lumineszenzpigment eine mittlere Teilchengröße zwischen 1 nm und 1.000 µm aufweist.

7. Verfahren nach einem der Ansprüche 1 bis 6, **dadurch gekennzeichnet, dass** die Änderung des Emissionsspektrums des Sicherheitselements auf der Modulation der Anregungsenergie und/oder einer zeitlich modulierten Anregung oder Emission und/oder einer thermisch modulierten Anregung oder Emission und/oder einer auf Druck modulierten Anregung oder Emission der Lumineszenzpigmente beruht.

8. Verfahren nach einem der Ansprüche 1 bis 7, das auf einer oder mehrerer Kombinationen der modulierten Anregung oder Emission durch das Emissionsspektrum, durch zeitliche, thermisch, Druck oder Anregungsenergie modulierte Anregung oder Emission von Lumineszenzpigmenten beruht.

9. Verfahren nach einem der Ansprüche 1 bis 8, **dadurch gekennzeichnet, dass** die Gegenstände ausgewählt sind aus Kunststoffen, Baumaterialien, Gummimassen, Farblacken, Papierrohmassen, Spezialgläsern, Keramikprodukten und keramischen Materialien; Explosivstoffen, Klebstoffen, Papieren einschließlich Wert- und Sicherheitsdokumenten, wie Banknoten und Wertpapieren, Kreditkarten, EC-Karten, Ausweisen, Passdokumenten, Kundenkarten, Urkunden, Briefmarken, Eintrittskarten, Audio- und Video-Medien, Verpackungen, Metallguss, Aluminium, Chemikalien, Glas, Textilien Kunst- und Naturfasern, Geweben und Gelegen (Nonwoven), Holz, Oberflächenbeschichtungen, Keramik, Pflanzen und Tieren sowie daraus hergestellten Produkten, einschließlich Fasern, Leder, Geweben und Gelegen, Elektronik, Verbundmaterialien, Kraftstoffe und Öle, Sinterwerkstoffe, Kosmetik, pharmazeutischen Produkten und Geräten.

## Claims

1. Method for identifying an object, wherein the object has a security element which contains one or more inorganic luminescent pigments, which method comprises the steps
- generating under defined excitation conditions at least two mutually different emission spectra of the luminescent pigment(s) used, wherein said spectra may be obtained with mutually different excitation pulses and/or represent the decay behaviour,
- comparing the obtained emission spectra with the predefined emission spectra obtained for the luminescent pigment(s) under the same excitation conditions.

2. Method according to claim 1, **characterized in that** the luminescent pigment is an inorganic solid-state compound which contains one or more luminescent ions from the group In⁺, Sn²⁺, Pb²⁺, Sb³⁺, Bi ³+, Ce³⁺, Ce⁴⁺, Pr³⁺, Nd³⁺, Sm²⁺, Sm³⁺, Eu²⁺, Eu³⁺, Gd³⁺, Tb³⁺, Dy³⁺, Ho³⁺, Er³⁺, Tm²⁺, Tm³⁺, Yb²⁺, Yb³⁺, Ti³⁺, V²⁺, V³⁺, V⁴⁺, Cr³⁺, Mn²⁺, Mn³⁺, Mn⁴⁺, Fe³⁺, Fe⁴⁺, Fe⁵⁺, Co³⁺, Co⁴⁺, Ni²⁺, Cu⁺, Ru²⁺, Ru³⁺, Pd²⁺, Ag⁺, Ir³⁺, Pt²⁺ and Au⁺.

3. Method according to any one of claims 1 or 2, **characterized in that** the luminescent pigment is a binary, ternary or quaternary halide, oxide, oxyhalide, sulphide, oxysulphide, sulphate, oxysulphate, selenide, nitride, oxynitride, nitrate, oxynitrate, phosphide, phosphate, carbonate, silicate, oxysilicate, vanadate, molybdate, tungstenate, germanate or oxygermanate of the elements Li, Na, K, Rb, Mg, Ca, Sr, Sc, Y, La, Ti, Zr, Hf, Nb, Ta, Zn, Gd, Lu, Al, Ga and In.

4. Method according to any one of claims 1 to 3, **characterized in that** the inorganic luminescent pigment is introduced into a UV-transparent matrix.

5. Method according to claim 4, **characterized in that** the UV-transparent matrix is a photonic matrix, such as an inverse opal.

6. Method according to any one of claims 1 to 5, **characterized in that** the luminescent pigment has a mean particle size of between 1 nm and 1000 µm.

7. Method according to any one of claims 1 to 6, **characterized in that** the change in the emission spectrum of the security element is based on the modulation of the excitation energy and/or a temporally modulated excitation or emission and/or a thermally modulated excitation or emission and/or a pressure-modulated excitation or emission of the luminescent pigments.

8. Method according to any one of claims 1 to 7, which is based on one or more combinations of the modulated excitation or emission by the emission spectrum through temporally modulated, thermally modulated, pressure-modulated or excitation energy-modulated excitation or emission of luminescent pigments.

9. Method according to any one of claims 1 to 8, **characterized in that** the objects are selected from plastics, building materials, rubber compounds, coloured varnishes, paper raw materials, special glasses, ceramic products and ceramic materials; explosives, adhesives, papers including documents of value and security documents such as banknotes and securities, credit cards, cash cards, identification cards, passport documents, charge cards, documents, stamps, tickets, audio and video media, packaging, cast metal, aluminium, chemicals, glass, textiles, synthetic and natural fibres, fabrics and nonwovens, wood, surface coatings, ceramics, plants and animals and products produced therefrom, including fibres, leather, fabrics and nonwovens, electronics, composite materials, fuels and oils, sinter materials, cosmetics, pharmaceutical products and devices.

## Revendications

1. Procédé d'identification d'un article, l'article comprenant un élément de sécurité qui contient un ou plusieurs pigments luminescents inorganiques, ledit procédé comprenant les étapes suivantes :
- la génération d'au moins deux spectres d'émission différents l'un de l'autre du ou des pigments luminescents utilisés dans des conditions d'excitation définies, ces spectres pouvant être obtenus avec des impulsions d'excitation différentes les unes des autres et/ou représentant le comportement de déclin,
- l'alignement des spectres d'émission obtenus avec les spectres d'émission déterminés obtenus pour le ou les pigments luminescents dans les mêmes conditions d'excitation.

2. Procédé selon la revendication 1, **caractérisé en ce que** le pigment luminescent est un composé solide inorganique, qui contient un ou plusieurs ions luminescents du groupe constitué par Ionen aus der Gruppe ln⁺, Sn²⁺, Pb²⁺, Sb³⁺, Bi³⁺, Ce³⁺, Ce⁴⁺, Pr³⁺, Nd³⁺, Sm²⁺, Sm³⁺, Eu²⁺, Eu³⁺, Gd³⁺, Tb³⁺, Dy³⁺, Ho³⁺, Er³⁺, Tm²⁺, Tm³⁺, Yb2⁺, Yb³⁺, Ti³⁺, V²⁺, V³⁺, V⁴⁺, Cr³⁺, Mn²⁺, Mn³⁺, Mn⁴⁺, Fe³⁺, Fe⁴⁺, Fe⁵⁺, Co³⁺, Co⁴⁺, Ni²⁺, Cu⁺, Ru²⁺, Ru³⁺, Pd²⁺, Ag⁺, Ir³⁺, Pt²⁺ et Au⁺.

3. Procédé selon l'une quelconque des revendications 1 ou 2, **caractérisé en ce que** le pigment luminescent est un halogénure binaire, ternaire ou quaternaire, un oxyde, un oxyhalogénure, un sulfure, un oxysulfure, un sulfate, un oxysulfate, un sélénure, un nitrure, un oxynitrure, un nitrate, un oxynitrate, un phosphide, un phosphate, un carbonate, un silicate, un oxysilicate, un vanadate, un molybdate, un tungstate, un germanate ou un oxygermanate des éléments Li, Na, K, Rb, Mg, Ca, Sr, Sc, Y, La, Ti, Zr, Hf, Nb, Ta, Zn, Gd, Lu, Al, Ga et In.

4. Procédé selon l'une quelconque des revendications 1 à 3, **caractérisé en ce que** le pigment luminescent inorganique est incorporé dans une matrice transparente aux UV.

5. Procédé selon la revendication 4, **caractérisé en ce que** la matrice transparente aux UV est une matrice photonique, telle qu'un opale inverse.

6. Procédé selon l'une quelconque des revendications 1 à 5, **caractérisé en ce que** le pigment luminescent présente une taille de particule moyenne comprise entre 1 nm et 1 000 µm.

7. Procédé selon l'une quelconque des revendications 1 à 6, **caractérisé en ce que** la modification du spectre d'émission de l'élément de sécurité repose sur la modulation de l'énergie d'excitation et/ou une excitation ou émission modulée dans le temps et/ou une excitation ou émission modulée thermiquement et/ou une excitation ou émssion modulée par la pression des pigments luminescents.

8. Procédé selon l'une quelconque des revendications 1 à 7, qui repose sur une ou plusieurs combinaisons de l'excitation ou émission modulée par le spectre d'émission, par excitation ou émission modulée dans le temps, thermiquement, par la pression ou l'énergie d'excitation de pigments luminescents.

9. Procédé selon l'une quelconque des revendications 1 à 8, **caractérisé en ce que** les articles sont choisis parmi les plastiques, les matériaux de construction, les matériaux en caoutchouc, les vernis colorés, les matières premières de papier, les verres spéciaux, les produits en céramique et les matériaux céramiques, les matières explosives, les adhésifs, les papiers, y compris les documents de valeur et de sécurité, tels que les billets de banque et les papiers de valeur, les cartes de crédit, les cartes EC, les pièces d'identité, les passeports, les cartes de clientèle, les actes notariés, les timbres, les cartes d'entrée, les supports audio et vidéo, les emballages, les pièces métalliques coulées,, l'aluminium, les produits chimiques, le verre, les textiles, les fibres artificielles et naturelles, les tissus et les non-tissés (nonwoven), le bois, les revêtements de surface, la céramique, les plantes et les animaux, ainsi que les produits fabriqués à partir de ceux-ci, y compris les fibres, le cuir, les tissus et non-tissés, les articles électroniques, les matériaux composites, les combustibles et les huiles, les matériaux frittés, les articles cosmétiques, les produits pharmaceutiques et les appareils.
